(19) Europäisches Patentamt European Patent Office Office européen des brevets

(11) **EP 3 736 135 B1**

(12) **EUROPÄISCHE PATENTSCHRIFT**

(45) Veröffentlichungstag und Bekanntmachung des Hinweises auf die Patenterteilung:
**09.08.2023** **Patentblatt 2023/32**

(21) Anmeldenummer: **19172733.8**

(22) Anmeldetag: **06.05.2019**

(51) Internationale Patentklassifikation (IPC):
*C22C 1/04* *(2023.01)* *B33Y 10/00* *(2015.01)*
*B33Y 70/00* *(2020.01)* *B22F 1/05* *(2022.01)*
*B22F 1/06* *(2022.01)* *B22F 1/068* *(2022.01)*
*B22F 10/28* *(2021.01)*

(52) Gemeinsame Patentklassifikation (CPC):
**B33Y 10/00; B22F 1/05; B22F 1/06; B22F 1/068;
B33Y 70/00; C22C 1/045;** B22F 10/28; Y02P 10/25

(54) **ADDITIVE FERTIGUNG EINES FORMKÖRPERS AUS EINEM REFRAKTÄRMETALLPULVER**

ADDITIVE MANUFACTURING OF A SHAPED ARTICLE FROM A REFRACTORY METAL POWDER

FABRICATION ADDITIVE D'UN CORPS MOULÉ À PARTIR D'UNE POUDRE MÉTALLIQUE RÉFRACTAIRE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(43) Veröffentlichungstag der Anmeldung:
**11.11.2020** **Patentblatt 2020/46**

(73) Patentinhaber: **Heraeus Deutschland GmbH & Co.
KG
63450 Hanau (DE)**

(72) Erfinder: **JÜCHTER, Vera Katharina
63450 Hanau (DE)**

(74) Vertreter: **Maiwald GmbH
Elisenhof
Elisenstraße 3
80335 München (DE)**

(56) Entgegenhaltungen:
EP-A2- 2 343 143          WO-A1-2016/004448
US-A1- 2017 209 963

- **TERRAZAS CESAR A ET AL: "Fabrication and characterization of high-purity niobium using electron beam melting additive manufacturing technology", THE INTERNATIONAL JOURNAL OF ADVANCED MANUFACTURING TECHNOLOGY, SPRINGER, LONDON, Bd. 84, Nr. 5, 10. September 2015 (2015-09-10), Seiten 1115-1126, XP035745714, ISSN: 0268-3768, DOI: 10.1007/S00170-015-7767-X [gefunden am 2015-09-10]**
- **N/a: "Metal powders from LPW PowderRange - Metal powders from LPW", , 30. April 2017 (2017-04-30), XP055629009, Gefunden im Internet: URL:https://carpenteradditive.com/wp-content/uploads/2016/11/LPW-Powders-Brochure-2017.pdf [gefunden am 2019-10-04]**
- **JUAN M RODRIGUEZ ET AL: "Particle shape quantities and measurement techniques - A review", THE ELECTRONIC JOURNAL OF GEOTECHNICAL ENGINEERING, Bd. 18/A, 1. Januar 2013 (2013-01-01), Seiten 169-198, XP055436071, ISSN: 1089-3032**

**Beschreibung**

Refraktärmetalle wie Wolfram lassen sich aufgrund ihrer hohen Schmelzpunkte ($T_m$(Wolfram): 3422°C) schlecht gießen. Außerdem schränkt ihre hohe Festigkeit die Verarbeitbarkeit durch Umformprozesse stark ein. Aufgrund dieser Eigenschaften werden Formkörper aus Refraktärmetallen daher üblicherweise durch pulvermetallurgische Verfahren hergestellt.

Um Formkörper mit komplexer Geometrie zu realisieren, wäre die Verwendung von Wolfram oder anderen Refraktärmetallen in additiven Herstellungsverfahren von Interesse.

In der Norm EN ISO/ASTM 52921:2017 werden die additiven Fertigungsverfahren in Kategorien eingeteilt. Für die additive Fertigung metallischer Formkörper eignen sich beispielsweise

- "*Powder BedFusion*" (Pulverbett-basierte Verfahren): Additives Fertigungsverfahren, bei dem durch einen örtlich selektiven Energieeintrag (z.B. durch einen Laserstrahl oder einen Elektronenstrahl) definierte Bereiche in einem Pulverbett verschmolzen werden;
- "*Directed Energy Deposition*": Additives Fertigungsverfahren, bei dem gebündelte thermische Energie genutzt wird, um Materialien an ihrem Aufbringungsort durch Verschmelzen miteinander zu verbinden;
- "*Binder Jetting*": Additives Fertigungsverfahren, bei dem ein flüssiges Bindemittel selektiv aufgetragen wird, um ein Pulver zu verfestigen;
- "*Sheet Lamination*": Additives Fertigungsverfahren, bei dem Schichten eines Materials flächig verbunden werden, um ein Objekt zu formen.

Eine Übersicht hinsichtlich der additiven Fertigung metallischer Formkörper findet sich bei W.J. Sames et al., International Materials Reviews, 61, 2016, S. 1-46.

Die Grundlagen der additiven Fertigung durch selektives Elektronenstrahlschmelzen beschreiben C. Körner et al. in "Schweißen und Schneiden", 69, 2017, Heft 1-2, S. 30-38. Das Elektronenstrahlschmelzen ist ein Pulverbett-basiertes additives Fertigungsverfahren, in dem ein Metallpulver in Schichten aufgebracht und das Metall in jeder aufgebrachten Schicht in definierten Bereichen durch den Elektronenstrahl aufgeschmolzen wird. Nach der Erstarrung des in einer Schicht aufgeschmolzenen Metalls kann eine weitere Pulverschicht aufgebracht werden. Um eine hohe Prozessstabilität zu erzielen, wird die aufgebrachte Metallpulverschicht vor dem Aufschmelzen bevorzugt einem Vorheizen (z.B. mit einem defokussierten Elektronenstrahl) unterzogen. Dabei wird das Pulver zumindest teilweise versintert und anschließend erfolgt das Aufschmelzen des versinterten Metalls in definierten Bereichen der Schicht mit einem fokussierten Elektronenstrahl. Das Elektronenstrahlschmelzen erfolgt unter Vakuum.

Die Herstellung kommerziell erhältlicher Wolframpulver erfolgt beispielsweise durch Reduktion eines Wolframoxids in reduzierender (z.B. Wasserstoff-haltiger) Gasatmosphäre. Die Pulverpartikel kommerziell erhältlicher Wolframpulver weisen herstellungsbedingt üblicherweise eine undefinierte Form auf, sofern sie nicht einer spezifischen Behandlung unterzogen wurden (z.B. Herstellung durch Gasverdüsung).

C. Chen et al., Materials Science and Technology, 34, 2018, S. 735-742, beschreiben die Herstellung eines Formkörpers aus Wolfram durch ein selektives Laserstrahlschmelzen (SLM). Bei der Verwendung eines Wolframpulvers mit undefinierter Partikelform führt die additive Fertigung durch selektives Laserstrahlschmelzen zu einem Formkörper, dessen relative Dichte maximal 91% betrug (siehe Figur 6 dieser Publikation). Deutlich höhere relative Dichten von bis zu 96,9% ließen sich nur unter Verwendung eines sphärischen Wolframpulvers realisieren. Die Herstellung eines solchen sphärischen Pulvers (z.B. durch Gasverdüsung) ist allerdings aufwändig. Kommerziell erhältliche sphärische Pulver eines Refraktärmetalls sind daher im Vergleich zu den Pulvern mit undefinierter Partikelform teurer. In der Praxis werden relative Dichten von mindestens 97%, bevorzugter mindestens 99% als "*dicht*" angenommen.

WO 2016/004448 A1 beschreibt ein additives Herstellungsverfahren eines Formkörpers aus einem Refraktärmetall durch ein Laser- oder Elektronenstrahlschmelzen. Die Partikel des verwendeten Pulvers weisen eine Kugelform auf und werden beispielsweise durch eine Sprühgranulation erhalten.

A.L. Cook und J.A. Slotwinski, National Institute of Standards and Technology, "Properties of Metal Powders for Additive Manufacturing: A Review of the State of the Art of MetalPowder Property Testing", erhältlich unter http://dx.doi.org/10.6028/NIST.IR.7873, beschreiben verschiedene Methoden zur Charakterisierung von Metallpulvern. Dem Fachmann bekannte Parameter für die Charakterisierung der Pulverpartikelmorphologie sind beispielsweise die Sphärizität und die Rundheit. Gemäß der Methode nach H. Wadell erfolgt die Bestimmung der Rundheit eines Pulverpartikels folgendermaßen: In Aufnahmen (z.B. Lichtmikroskopie-Aufnahmen) von Pulverpartikeln wird für jede Teilchenprojektion der größte Innenkreis eingefügt und an allen konvexen Stellen der Teilchenprojektion wird ein Krümmungskreis angepasst. In Figur 6 der Publikation von A.L. Cook und J.A. Slotwinski wird dies anhand zweier beispielhafter Partikel veranschaulicht. Die Rundheit eines Pulverpartikels ergibt sich anhand der folgenden Formel

$$\text{Rundheit} = \frac{\sum_{i=1}^{n}\left(\dfrac{r_i}{R}\right)}{n}$$

wobei

n die Anzahl der Krümmungskreise ist,
$r_i$ der Radius des i-ten Krümmungskreises ist,
R der Radius des größten Innenkreises ist.

Die Rundheit nach Wadell ist ein Maß für die Kantigkeit der Partikel. Je geringer der Wert der Rundheit (nachfolgend auch als Wadell-Rundheit bezeichnet), desto kantiger ist die Partikelform. Während die Sphärizität eines Partikels ein Maß für das Verhältnis des größten Durchmessers zu dem kleinsten Durchmesser dieses Partikels ist, gibt die nach Wadell bestimmte Rundheit Auskunft über die tatsächliche Form des Partikels. Sphärizität und Rundheit sind voneinander unabhängige Parameter. Ein Pulverpartikel kann beispielsweise eine hohe Sphärizität (ausgedrückt über das Verhältnis von größtem Durchmesser zu kleinstem Durchmesser des Partikels), jedoch eine geringe Rundheit aufweisen.

WO 2016/004448 A1 beschreibt ein Verfahren zur Herstellung eines Bauteils aus Refraktärmetall oder einer Refraktärmetalllegierung mit einem Refraktärmetallgehalt > 50 at%, das die Schritte Bereitstellen eines aus Partikeln gebildeten Pulvers und Verfestigen des Pulvers unter Einwirken eines Laser- oder Elektronenstrahls umfasst, wobei das Pulver eine Partikelgröße $d_{50}$ von mehr als 10 μm und eine BET-Oberfläche von mehr als 0,08 m²/g aufweist.

US 2017/209963 A1 beschreibt ein additives Verfahren zur Herstellung eines Formkörpers unter Verwendung eines Metalldrahtes.

C.A. Terrazas et al., Int. J. Adv. Manuf. Technol., 84, 2016, S. 1115-1126, beschreiben eine Pulverbett-basierte additive Fertigung unter Verwendung eines Niobpulvers.

Die Brochure "PowderRange - Metal powders from LPW" (https://carpenteradditive.com/wp-content/uploads/2016/11/LPW-Powders-Brochure-2017.pdf) offenbart kommerziell erhältliche Pulver (z.B. W-Pulver) für das Elektronenstrahlschmelzen.

EP 2 343 143 A2 beschreibt ein Verfahren zur Fertigung von Bauteilen aus Refraktärmetallen, wobei pulverförmige Bestandteile von Refraktärmetallen mittels Elektronenstrahlschmelzen punktweise aufgeschmolzen und die Bauteile in ihrer Endform oder in einer endformnahen Kontur herausgebildet werden.

Eine Aufgabe der vorliegenden Erfindung ist die Herstellung eines Refraktärmetallhaltigen Formkörpers über ein Verfahren, das möglichst effizient ist (z.B. keine spezifische Vorbehandlung des Ausgangsmaterials erfordert) und mit dem sich Formkörper komplexer Geometrie und hoher relativer Dichte realisieren lassen.

Gelöst wird die Aufgabe durch die Verwendung eines pulverförmigen Refraktärmetalls zur Pulverbettbasierten additiven Fertigung eines Formkörpers, wobei das pulverförmige Refraktärmetall eine mittlere Rundheit, bestimmt gemäß der nachfolgend in der Beschreibung angegebenen Methode, im Bereich von 0,30 bis 0,70 und eine BET-Oberfläche, bestimmt mit Stickstoff als Adsorbat bei 77 K unter Verwendung der Mehrpunktmethode gemäß ISO 9277: 2010, von weniger als 0,07 m²/g aufweist und die additive Fertigung durch ein Elektronenstrahlschmelzen erfolgt, wobei das Refraktärmetall ein elementares Refraktärmetall oder eine Legierung eines Refraktärmetalls, die ein oder mehrere Refraktärmetalle in einer Menge von mehr als 50 at% enthält, ist und das Refraktärmetall Wolfram, Niob, Tantal, Chrom, Molybdän oder Rhenium ist.

Im Rahmen der vorliegenden Erfindung wurde überraschend festgestellt, dass sich durch Elektronenstrahlschmelzen ein Refraktärmetall wie z.B. Wolfram auch dann zu einem Formkörper hoher relativer Dichte additiv fertigen lässt, wenn die Pulverpartikel eine sehr kantige Form (und somit eine geringe Rundheit) aufweisen. Eine aufwändige Vorbehandlung, durch die die Pulverpartikel in eine möglichst sphärische Partikelform überführt werden, ist nicht erforderlich. Solche Pulver eines Refraktärmetalls, die eine relativ geringe Rundheit aufweisen, sind kommerziell erhältlich oder in bekannter Weise durch Reduktion einer Refraktärmetallverbindung (z.B. eines Refraktärmetalloxids) in reduzierender (z.B. Wasserstoff-haltiger) Gasatmosphäre erhältlich. Als kommerziell erhältliches Wolframpulver, das eine mittlere Rundheit von weniger als 0,70 aufweist, kann beispielsweise das von H.C.

Starck unter der Bezeichnung "WMP GG" vertriebene Wolfram-Pulver genannt werden.

Wie oben bereits erwähnt, gibt die nach Wadell bestimmte Rundheit Auskunft über die tatsächliche Form des Partikels, während die Sphärizität ein Maß für das Verhältnis des größten Durchmessers zu dem kleinsten Durchmesser des Partikels ist. Sphärizität und Rundheit sind voneinander unabhängige Parameter. Ein Pulverpartikel kann beispielsweise eine hohe Sphärizität (ausgedrückt über das Verhältnis von größtem Durchmesser zu kleinstem Durchmesser des Partikels), jedoch eine geringe Rundheit aufweisen.

Das Refraktärmetall ist Wolfram, Niob, Tantal, Chrom, Molybdän oder Rhenium. Bevorzugt ist das Refraktärmetall Wolfram oder Molybdän, besonders bevorzugt Wolfram.

Das Refraktärmetall kann ein elementares Refraktärmetall oder eine Legierung eines Refraktärmetalls sein.

Sofern das Refraktärmetall als elementares Refraktärmetall vorliegt, enthält es andere Metalle nur in Form unvermeidlicher Verunreinigungen, z.B. in einer Gesamtmenge von weniger als 0,5 Gew%, bevorzugt weniger als 0,2 Gew% oder sogar weniger als 0,1 Gew%.

Sofern das Refraktärmetall als Legierung vorliegt, enthält die Legierung ein oder mehrere der oben genannten Refraktärmetalle in einer Menge von mehr als 50 at%, bevorzugter ≥70 at%, noch bevorzugter ≥ 90 at%, beispielsweise im Bereich von 90-99 at%. Ist das Refraktärmetall beispielsweise Wolfram und liegt dieses als Legierung vor, so kann die Wolfram-basierte Legierung beispielsweise ein oder mehrere der folgenden Nicht-Refraktärmetalle als Legierungselement enthalten: Ni, Fe, Co. Optional kann ein Teil des Wolframs durch ein oder mehrere der folgenden Refraktärmetalle substituiert sein: Ta, Mo, Re.

Bevorzugt weist das pulverförmige Refraktärmetall eine mittlere Rundheit im Bereich von 0,35 bis 0,65 auf.

Das pulverförmige Refraktärmetall weist beispielsweise eine Volumen-basierte Partikelgrößenverteilung mit einem $d_{50}$-Wert im Bereich von 15 $\mu$m bis 150 $\mu$m auf.

Das pulverförmige Refraktärmetall weist eine BET-Oberfläche von weniger als 0,07 m$^2$/g, bevorzugter weniger als 0,05 m$^2$/g auf.

Der aus dem Refraktärmetall gebildete Formkörper weist beispielsweise eine relative Dichte von mindestens 95%, bevorzugter mindestens 97,0%, noch bevorzugter mindestens 98,0% oder sogar mindestens 99,0% auf.

Die vorliegende Erfindung betrifft außerdem ein Verfahren zur additiven Fertigung eines Formkörpers, der ein Refraktärmetall enthält, durch ein Elektronenstrahlschmelzen, umfassend:

(i) Aufbringen des oben beschriebenen pulverförmigen Refraktärmetalls in Form einer Schicht auf einem Substrat,

(ii) Aufschmelzen des Refraktärmetalls in definierten Bereichen der Schicht durch einen Elektronenstrahl und Erstarren lassen des aufgeschmolzenen Metalls,

(iii) Aufbringen einer weiteren Schicht des pulverförmigen Refraktärmetalls auf der zuvor aufgebrachten Schicht,

(iv) Aufschmelzen des Refraktärmetalls in definierten Bereichen der weiteren Schicht durch einen Elektronenstrahl und Erstarren lassen des aufgeschmolzenen Metalls,

(v) optional ein oder mehrmalige Wiederholung der Schritte (iii)-(iv).

Hinsichtlich der bevorzugten Eigenschaften des pulverförmigen Refraktärmetalls kann auf die obigen Ausführungen verwiesen werden.

Das Aufbringen des pulverförmigen Refraktärmetalls in Form einer Schicht auf einem Substrat in dem Bauraum einer Vorrichtung für Elektronenstrahlschmelzen erfolgt unter Bedingungen, die dem Fachmann im Rahmen eines additiven Fertigungsverfahrens bekannt sind. Bei dem Substrat kann es sich um die noch unbeschichtete Bauplatte im Bauraum der Vorrichtung oder alternativ um zuvor bereits auf der Bauplatte abgeschiedene Materialschichten des herzustellenden Formkörpers und/oder einer Stützstruktur handeln. Das schichtförmige Aufbringen des pulverförmigen Metalls erfolgt beispielsweise durch ein Rakel, eine Walze, eine Presse oder durch Siebdruck oder eine Kombination aus mindestens zwei dieser Methoden.

Das pulverförmige Refraktärmetall kann optional nach dem Aufbringen jeweils einem Vorheizen unterzogen werden, beispielsweise unter Verwendung eines defokussierten Elektronenstrahls. Durch das Vorheizen wird gegebenenfalls das aufgebrachte pulverförmige Refraktärmetall zumindest teilweise versintert. Anschließend erfolgt dann das Aufschmelzen des zumindest teilweise versinterten Refraktärmetalls in definierten Bereichen der jeweiligen Schicht.

Das Aufschmelzen des Refraktärmetalls in definierten Bereichen einer Schicht erfolgt üblicherweise mit einem fokussierten Elektronenstrahl.

Mit dem Begriff "in definierten Bereichen" wird bekanntermaßen zum Ausdruck gebracht, dass im Rahmen der additiven Fertigung digitale 3D-Daten des Formkörpers die Bereiche einer Schicht, die aufgeschmolzen werden sollen, vorgeben.

Ein geeigneter Energieeintrag durch den Elektronenstrahl, der zu einem Aufschmelzen des Refraktärmetalls führt, ist dem Fachmann bekannt oder kann durch Routineversuche bestimmt werden. Beispielsweise beträgt die durch den Elektronenstrahl eingetragene Volumenenergie beim Aufschmelzen des Refraktärmetalls 150-400 J/mm$^3$.

Eine geeignete Dicke der aufgebrachten Schicht des pulverförmigen Refraktärmetalls kann der Fachmann über Routineversuche bestimmen. Beispielsweise weist die in den Schritten (i) und (iii) aufgebrachte Schicht des pulverförmigen Refraktärmetalls eine Dicke im Bereich von 15 $\mu$m bis 400 $\mu$m auf.

Wie dem Fachmann bekannt ist, wird das Elektronenstrahlschmelzen üblicherweise unter Vakuum (z.B. einem Druck von weniger als 0,01 mbar) durchgeführt.

Wie oben bereits erwähnt, weist der aus dem Refraktärmetall gebildete Formkörper beispielsweise eine relative Dichte von mindestens 95%, bevorzugter mindestens 97,0%, noch bevorzugter mindestens 98,0% oder sogar mindestens 99,0% auf.

**Messmethoden**

Im Rahmen der vorliegenden Erfindung wurden folgende Messmethoden verwendet:

Mittlere Rundheit nach Wadell (mittlere Wadell-Rundheit)

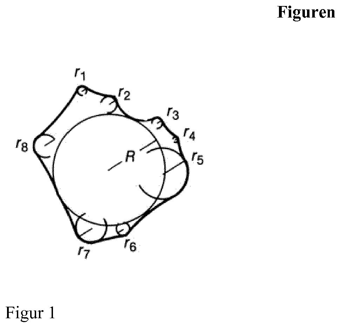

In Bildaufnahmen von mindestens 1000 Pulverpartikeln wird für jede Partikelprojektion der größte Innenkreis (mit einem Radius R) eingefügt und an allen konvexen Stellen der Partikelprojektion wird jeweils ein Krümmungskreis (mit dem Radius $r_i$) angepasst. In Figur 1 wird dies beispielhaft veranschaulicht. Die Wadell-Rundheit eines Pulverpartikels ergibt sich anhand der folgenden Formel:

$$\text{Rundheit} = \frac{\sum\limits_{i=1}^{n}\left(\dfrac{r_i}{R}\right)}{n}$$

wobei

    n die Anzahl der Krümmungskreise ist,
    $r_i$ der Radius des i-ten Krümmungskreises ist,
    R der Radius des größten Innenkreises ist.

Die mittlere Wadell-Rundheit des Pulvers ergibt sich aus dem arithmetischen Mittelwert der Wadell-Rundheitswerte der einzelnen Pulverpartikel.

Die Auswertung der Partikelform hinsichtlich ihrer Wadell-Rundheit erfolgte mit dem Partikelmessgerät Camsizer® X2 der Firma Retsch Technology.

### Partikelgrößen

Die Partikelgrößenverteilung wird durch Bildanalyse von mindestens 1000 Pulverpartikeln durchgeführt. Es handelt sich um eine Volumen-basierte Größenverteilungskurve. Als Größe eines einzelnen Partikels wird der Durchmesser eines Kreises, dessen Fläche der Projektionsfläche des Partikels in der Aufnahme entspricht, genommen ("Kreisäquivalent-Durchmesser"). Aus der Verteilungskurve lässt sich der $d_{50}$-Wert bestimmen.

Die Bestimmung der Partikelgrößen erfolgte mit dem Partikelmessgerät Camsizer® X2 der Firma Retsch Technology.

### Relative Dichte

Die relative Dichte $D_{rel}$ (in %) ergibt sich aus $(\rho_{geo}/\rho_{th}) \times 100\%$, wobei $\rho_{geo}$ die geometrische Dichte des Bauteils und $\rho_{th}$ die theoretische Dichte des Bauteils ist. Die geometrische Dichte kann nach dem Archimedes-Prinzip beispielsweise mit einer hydrostatischen Waage ermittelt werden. Die theoretische Dichte des Bauteils entspricht der theoretischen Dichte des Metalls, aus dem das Bauteil gebildet ist.

### Zusammensetzung des Refraktärmetallpulvers

Bestimmt durch optische Emissionsspektrometrie mittels induktiv gekoppeltem Plasma (ICP-OEC)

### BET-Oberfläche

Messung erfolgte mit Stickstoff als Adsorbat bei 77 K. Die Bestimmung der BET-Oberfläche erfolgte unter Verwendung der Mehrpunktmethode (ISO 9277:2010).

Anhand des nachfolgenden Beispiels wird die vorliegende Erfindung eingehender beschrieben.

### Beispiel

Für die additive Fertigung wurde ein Wolframpulver verwendet, das eine mittlere Rundheit, bestimmt gemäß der oben beschriebenen Methode mit dem Partikelmessgerät Camsizer® X2 der Firma Retsch Technology, von 0,47 aufwies. Es handelte sich also um ein Pulver aus relativ kantigen Wolframpartikeln. Das in dem Beispiel verwendete Wolframpulver ist kommerziell erhältlich und wird von der Firma H.C. Starck unter der Bezeichnung "WMP GG" vertrieben.

Folgende Anlage wurde für das Elektronenstrahlschmelzen verwendet: Arcam A2X der Firma Arcam AB.

Die Schichten des Wolframpulvers wurden in einer Dicke von etwa 25-250 μm aufgebracht. Über einen defokusierten Elektronenstrahl wurden die Pulverschichten jeweils vorgeheizt, so dass die Pulverpartikel zumindest teilweise miteinander versintert wurden. Das Aufschmelzen des Wolframs in den vorgegebenen Bereichen der jeweiligen Schicht erfolgte mit einem fokussierten Elektronenstrahl.

Es wurde ein Wolfram-Formkörper mit einer sehr hohen relativen Dichte von 99,7% erhalten.

Ein Refraktärmetall wie z.B. Wolfram lässt sich also durch Elektronenstrahlschmelzen auch dann zu einem Formkörper hoher relativer Dichte additiv fertigen, wenn die Pulverpartikel eine sehr kantige Form (und somit eine geringe Rundheit) aufweisen. Eine aufwändige Vorbehandlung, durch die die Pulverpartikel in eine möglichst sphärische Partikelform überführt werden, ist nicht erforderlich.

### Patentansprüche

1. Verwendung eines pulverförmigen Refraktärmetalls zur Pulverbett-basierten additiven Fertigung eines Formkörpers, wobei das pulverförmige Refraktärmetall eine mittlere Rundheit, bestimmt nach der in der Beschreibung angegebenen Methode, im Bereich von 0,30 bis 0,70 und eine BET-Oberfläche, bestimmt mit Stickstoff als Adsorbat bei 77 K unter Verwendung der Mehrpunktmethode gemäß ISO 9277: 2010, von weniger als 0,07 m²/g aufweist und die additive Fertigung durch ein Elektronenstrahlschmelzen erfolgt, wobei das Refraktärmetall ein elementares Refraktärmetall oder eine Legierung eines Refraktärmetalls, die ein oder mehrere Refraktärmetalle in einer Menge von mehr als 50 at% enthält, ist und das Refraktärmetall Wolfram, Niob, Tantal, Chrom, Molybdän oder Rhenium ist.

2. Verwendung nach Anspruch 1, wobei die mittlere Rundheit des pulverförmigen Refraktärmetalls im Bereich von 0,35 bis 0,65 liegt.

3. Verwendung nach einem der vorstehenden Ansprüche, wobei das pulverförmige Refraktärmetall eine Volumen-basierte Partikelgrößenverteilung, bestimmt durch Bildanalyse von mindestens 1000 Pulverpartikeln gemäß der in der Beschreibung angegebenen Methode, wobei die Größe eines einzelnen Partikels dessen Kreisäquivalent-Durchmesser ist, mit einem $d_{50}$-Wert im Bereich von 15 μm bis 150 μm aufweist.

4. Verwendung nach einem der vorstehenden Ansprüche, wobei der aus dem Refraktärmetall gebildete Formkörper eine relative Dichte $D_{rel}$ von mindestens 95,0%, bevorzugter mindestens 97,0%, noch bevorzugter mindestens 98,0%, am bevorzugsten mindestens 99,0% aufweist, wobei $D_{rel}= (\rho_{geo} / \rho_{th}) \times 100\%$

   $\rho_{geo}$: geometrische Dichte des Formkörpers, bestimmt mit einer hydrostatischen Waage,
   $\rho_{th}$: theoretische Dichte des Formkörpers.

5. Verfahren zur additiven Fertigung eines Formkörpers, der ein Refraktärmetall enthält, durch ein Elektronenstrahlschmelzen, umfassend:

   (i) Aufbringen eines pulverförmigen Refraktärmetalls in Form einer Schicht auf einem Substrat, wobei das pulverförmige Refraktärmetall eine mittlere Rundheit, bestimmt nach der in der Beschreibung angegebenen Methode, im Bereich von 0,30 bis 0,70 und eine BET-Oberfläche, bestimmt mit Stickstoff als Adsorbat bei 77 K unter Verwendung der Mehrpunktmethode gemäß ISO 9277: 2010, von weniger als 0,07 m$^2$/g aufweist, wobei das Refraktärmetall ein elementares Refraktärmetall oder eine Legierung eines Refraktärmetalls, die ein oder mehrere Refraktärmetalle in einer Menge von mehr als 50 at% enthält, ist und das Refraktärmetall Wolfram, Niob, Tantal, Chrom, Molybdän oder Rhenium ist,
   (ii) Aufschmelzen des Refraktärmetalls in definierten Bereichen der Schicht durch einen Elektronenstrahl und Erstarren lassen des aufgeschmolzenen Metalls,
   (iii) Aufbringen einer weiteren Schicht des pulverförmigen Refraktärmetalls auf der zuvor aufgebrachten Schicht,
   (iv) Aufschmelzen des Refraktärmetalls in definierten Bereichen der weiteren Schicht durch einen Elektronenstrahl und Erstarren lassen des aufgeschmolzenen Metalls,
   (v) optional ein- oder mehrmalige Wiederholung der Schritte (iii)-(iv).

6. Das Verfahren nach Anspruch 5, wobei die mittlere Rundheit des pulverförmigen Refraktärmetalls im Bereich von 0,35 bis 0,65 liegt.

7. Das Verfahren nach einem der Ansprüche 5-6, wobei das pulverförmige Refraktärmetall eine Volumen-basierte Partikelgrößenverteilung, bestimmt durch Bildanalyse von mindestens 1000 Pulverpartikeln gemäß der in der Beschreibung angegebenen Methode, wobei die Größe eines einzelnen Partikels dessen Kreisäquivalent-Durchmesser ist, mit einem $d_{50}$-Wert im Bereich von 15 μm bis 150 μm aufweist.

## Claims

1. A use of a powdered refractory metal for powder bed-based additive manufacturing of a shaped body, wherein the powdered refractory metal has a mean roundness, determined according to the method specified in the description, in the range of from 0.30 to 0.70, and a BET surface area, determined with nitrogen as an adsorbate at 77 K using the multi-point method according to ISO 9277: 2010, of less than 0.07 m$^2$/g, and additive manufacturing is carried out by electron beam melting, wherein the refractory metal is an elemental refractory metal or an alloy of a refractory metal which contains one or more refractory metals in an amount of more than 50 at.%, and the refractory metal is tungsten, niobium, tantalum, chromium, molybdenum or rhenium.

2. The use according to claim 1, wherein the mean roundness of the powdered refractory metal is in the range of from 0.35 to 0.65.

3. The use according to any of the preceding claims, wherein the powdered refractory metal has a volume-based particle size distribution, determined by image analysis of at least 1000 powder particles according to the method specified in the description, wherein the size of a single particle is the circle equivalent diameter thereof, which distribution has a $d_{50}$ value in the range of from 15 μm to 150 μm.

4. The use according to any of the preceding claims, wherein the shaped body formed from the refractory metal has a relative density $D_{rel}$ of at least 95.0%, more preferably at least 97.0%, even more preferably at least 98.0%, most preferably at least 99.0%, wherein $D_{rel}= (\rho_{geo} / \rho_{th}) \times 100\%$

   $\rho_{geo}$: geometric density of the shaped body, determined using a hydrostatic weighing machine,
   $\rho_{th}$: theoretical density of the shaped body.

5. A method for additive manufacturing of a shaped body containing a refractory metal by means of electron beam melting, comprising:

   (i) applying a powdered refractory metal in the form of a layer to a substrate, wherein the powdered refractory metal has a mean roundness, determined according to the method specified in the description, in the range of from 0.30 to 0.70, and a BET surface area, determined with nitrogen as an adsorbate at 77 K using the multi-point method according to ISO 9277: 2010, of less than 0.07 m$^2$/g, wherein the refractory metal is an elemental refractory metal or an alloy of a refractory metal which contains one or more refractory metals in an amount of more than 50 at.%, and the refractory metal is tungsten, niobium, tantalum, chromium, molybdenum or rhenium,

(ii) melting the refractory metal in defined regions of the layer by means of an electron beam and solidifying the molten metal,

(iii) applying a further layer of the powdered refractory metal to the previously applied layer,

(iv) melting the refractory metal in defined regions of the further layer by means of an electron beam and solidifying the molten metal,

(v) optionally repeating steps (iii)-(iv) one or more times.

6. The method according to claim 5, wherein the mean roundness of the powdered refractory metal is in the range of from 0.35 to 0.65.

7. The method according to either of claims 5-6, wherein the powdered refractory metal has a volume-based particle size distribution, determined by image analysis of at least 1000 powder particles according to the method specified in the description, wherein the size of a single particle is the circle equivalent diameter thereof, which distribution has a $d_{50}$ value in the range of from 15 $\mu$m to 150 $\mu$m.

**Revendications**

1. Utilisation d'un métal réfractaire pulvérulent pour la fabrication additive, basée sur un lit de poudre, d'un corps moulé, le métal réfractaire pulvérulent présentant une rotondité moyenne, déterminée conformément à la méthode indiquée dans la description, dans la plage de 0,30 à 0,70 et une aire de surface BET, déterminée avec de l'azote comme adsorbat à 77 K en utilisant la méthode à points multiples suivant ISO 9277 : 2010, inférieure à 0,07 m$^2$/g, et la fabrication additive étant réalisée par fusion par faisceau d'électrons, le métal réfractaire étant un métal réfractaire élémentaire ou un alliage d'un métal réfractaire, lequel alliage contient un ou plusieurs métaux réfractaires en une quantité supérieure à 50 %, et le métal réfractaire étant le tungstène, le niobium, le tantale, le chrome, le molybdène ou le rhénium.

2. Utilisation selon la revendication 1, dans laquelle la rotondité moyenne du métal réfractaire pulvérulent se situe dans la plage de 0,35 à 0,65.

3. Utilisation selon l'une quelconque des revendications précédentes, dans laquelle le métal réfractaire pulvérulent présente une distribution granulométrique basée sur le volume, déterminée par analyse d'image d'au moins 1 000 particules de poudre conformément à la méthode indiquée dans la description, la taille de chaque particule étant le diamètre équivalent à son cercle, ayant une valeur $d_{50}$ dans la plage de 15 à 150 $\mu$m.

4. Utilisation selon l'une quelconque des revendications précédentes, dans laquelle le corps moulé formé à partir du métal réfractaire présente une densité relative $D_{rel}$ d'au moins 95,0 %, de préférence d'au moins 97,0 %, plus préférentiellement encore d'au moins 98,0 %, de manière plus préférée d'au moins 99,0 %, où $D_{rel} = (\rho_{geo} / \rho_{th}) \times 100 \%$

$\rho_{geo}$ : densité géométrique du corps moulé, déterminée à l'aide d'une balance hydrostatique,
$\rho_{th}$ : densité théorique du corps moulé.

5. Procédé de fabrication additive d'un corps moulé comportant un métal réfractaire, par fusion par faisceau d'électrons, comprenant :

(i) l'application d'un métal réfractaire pulvérulent sous forme de couche sur un substrat, le métal réfractaire pulvérulent présentant une rotondité moyenne, déterminée conformément à la méthode indiquée dans la description, dans la plage de 0,30 à 0,70 et une aire de surface BET, déterminée avec de l'azote comme adsorbat à 77 K en utilisant la méthode à points multiples suivant ISO 9277 : 2010, inférieure à 0,07 m$^2$/g, le métal réfractaire étant un métal réfractaire élémentaire ou un alliage d'un métal réfractaire, lequel alliage contient un ou plusieurs métaux réfractaires en une quantité supérieure à 50 %, et le métal réfractaire étant le tungstène, le niobium, le tantale, le chrome, le molybdène ou le rhénium,

(ii) la fusion du métal réfractaire dans des zones définies de la couche, par un faisceau d'électrons, et le fait de laisser le métal fondu se solidifier,

(iii) l'application d'une autre couche du métal réfractaire pulvérulent sur la couche précédemment déposée,

(iv) la fusion du métal réfractaire dans des zones définies d'une autre couche, par un faisceau d'électrons, et le fait de laisser le métal fondu se solidifier,

(v) éventuellement la répétition une ou plusieurs fois des étapes (iii) à (iv).

6. Procédé selon la revendication 5, dans lequel la rotondité moyenne du métal réfractaire pulvérulent se situe dans la plage de 0,35 à 0,65.

7. Procédé selon l'une quelconque des revendications 5 à 6, dans lequel le métal réfractaire pulvérulent présente une distribution granulométrique basée sur le volume, déterminée par analyse d'image d'au moins 1 000 particules de poudre conformément à la méthode indiquée dans la description, la taille de chaque particule étant le diamètre équivalent à son cercle, ayant une valeur d50 dans la plage de 15 à 150 $\mu$m.

**Figuren**

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016004448 A1
- US 2017209963 A1
- EP 2343143 A2

**In der Beschreibung aufgeführte Nicht-Patentliteratur**

- **W.J. SAMES et al.** *International Materials Reviews,* 2016, vol. 61, 1-46
- **C. KÖRNER et al.** *Schweißen und Schneiden,* 2017, vol. 69 (1-2), 30-38
- **C. CHEN et al.** *Materials Science and Technology,* 2018, vol. 34, 735-742
- **A.L. COOK ; J.A. SLOTWINSKI.** Properties of Metal Powders for Additive Manufacturing: A Review of the State of the Art of MetalPowder Property Testing. National Institute of Standards and Technology
- **C.A. TERRAZAS et al.** *Int. J. Adv. Manuf. Technol.,* 2016, vol. 84, 1115-1126
- *PowderRange - Metal powders from LPW,* https://carpenteradditive.com/wp-content/uploads/2016/11/LPW-Powders-Brochure-2017.pdf